Europäisches Patentamt

European Patent Office

Office européen des brevets

(19)

(11) EP 0 927 678 A1

(12) DEMANDE DE BREVET EUROPEEN

(43) Date de publication:
07.07.1999 Bulletin 1999/27

(51) Int Cl.$^6$: B62D 6/04

(21) Numéro de dépôt: 98403206.0

(22) Date de dépôt: 18.12.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 31.12.1997 FR 9716780

(71) Demandeur: RENAULT
92109 Boulogne-Billancourt (FR)

(72) Inventeurs:
• Baerd, Sébastien
  92150 Suresnes (FR)
• Bosser, Luc
  28410 Abondant (FR)
• Fortin, Vincent
  78810 Feucherolles (FR)
• Langevin, Patrice
  27400 Heudebouville (FR)

(54) **Système de correction automatique de la trajectoire d'un véhicule soumis à des pertubations de la chaussée ou du vent latéral**

(57) L'invention concerne un système pour corriger automatiquement la trajectoire d'un véhicule soumis à des perturbations dues à la chaussée et au vent latéral.

Selon un exemple de réalisation, le boîtier de crémaillère (27) est mobile le long d'un axe (30), son déplacement étant obtenu par un vérin hydraulique (10) dont la tige mobile (31) se déplace en fonction des pressions fournies par un régulateur/électro-valve 12 recevant, d'une part, une valeur mesurée d'élongation ($L_m$) et, d'autre part, une valeur de consigne d'élongation ($L_c$) fournie par un calculateur (13), à partir de valeurs mesurées de la vitesse de lacet ($\Phi'_m$), de l'angle volant ($\alpha_v$), de la vitesse linéaire longitudinale (V) et, éventuellement, des accélérations transversales avant ($\Gamma_{av}$) et arrière ($\Gamma_{ar}$).

L'invention est applicable aux véhicules routiers.

FIG.1

EP 0 927 678 A1

## Description

L'invention concerne les véhicules routiers et, plus particulièrement dans de tels véhicules, un système pour corriger automatiquement la trajectoire du véhicule lorsque ce dernier est soumis à des perturbations dues à la chaussée ou au vent latéral.

Un véhicule routier qui est soumis à des perturbations provenant de la chaussée déformée ou d'un coup de vent latéral a une tendance naturelle à se déporter. Le conducteur va donc devoir agir sur le braquage du volant pour corriger la trajectoire.

Par ailleurs, le comportement du véhicule peut évoluer au cours du temps, se traduisant par l'augmentation ou la réduction du sous-virage, en fonction de paramètres tels que la charge, le type et l'usure des pneumatiques, ce qui peut être une source de perturbation et de désagrément pour le conducteur.

Il a été proposé des systèmes de correction automatique de la trajectoire d'un véhicule, dans lesquels le boîtier de direction classique était substantiellement modifié pour obtenir la correction de trajectoire recherchée, ce qui conduit à un coût élevé du système.

Un but de la présente invention est donc un système de correction automatique de la trajectoire d'un véhicule soumis à des perturbations dues à la chaussée ou au vent latéral qui permet de garder sans modification le boîtier de direction actuel.

L'invention concerne donc un système de correction automatique de la trajectoire d'un véhicule soumis à des perturbations dues à la chaussée ou au vent latéral comprenant un dispositif de braquage des roues avant du type à crémaillère et à biellettes de direction, caractérisé en ce qu'il comprend :

- des premiers moyens pour mesurer une valeur représentative de la position réelle de braquage des roues avant,
- des deuxièmes moyens pour calculer une valeur de consigne $L_c$ pour le braquage des roues avant, et
- des troisièmes moyens pour modifier la valeur représentative $L_m$ de la position réelle de braquage de manière à obtenir l'égalité $L_m = L_c$.

Selon l'invention, les troisièmes moyens comprennent un régulateur/électro-valve qui reçoit la valeur mesurée $L_m$ et la valeur de consigne d'élongation calculée $L_c$ et un vérin hydraulique qui est commandé par les pressions fournies par le régulateur/électro-valve de manière à modifier l'élongation $L_m$ de la tige mobile du vérin hydraulique.

Dans un premier exemple de réalisation, le vérin hydraulique est solidaire de la caisse du véhicule et la tige mobile du vérin hydraulique est fixée au boîtier de crémaillère qui est monté mobile par rapport à la caisse du véhicule.

Dans un deuxième exemple de réalisation, le vérin hydraulique remplace une des deux biellettes de direction de manière que sa tige mobile soit solidaire du barreau de crémaillère, le boîtier de crémaillère étant fixé à la caisse du véhicule.

Dans les deux exemples de réalisation, les premiers moyens comprennent un capteur de position qui est solidaire du vérin hydraulique et qui mesure l'élongation $L_m$ de la tige mobile du vérin hydraulique.

Dans les deux exemples de réalisation, la valeur de l'élongation de consigne peut être obtenue selon deux variantes. Dans une première variante, à partir des valeurs mesurées de la vitesse de lacet, de l'angle volant et de la vitesse linéaire longitudinale et, dans une deuxième variante, en tenant compte, en outre, des valeurs des accélérations transversales avant et arrière du véhicule.

D'autres caractéristiques et avantages de la présente invention apparaîtront à la lecture de la description suivante d'exemples particuliers de réalisation, ladite description étant faite en relation avec les dessins joints dans lesquels :

- la figure 1 est un schéma d'un premier système de correction automatique de trajectoire d'un véhicule selon l'invention,
- la figure 2 est un schéma d'un deuxième système de correction automatique de trajectoire d'un véhicule selon l'invention,
- la figure 3 est un schéma fonctionnel décrivant une première loi de commande de correction d'angle de braquage du volant,
- la figure 4 est un schéma fonctionnel décrivant une deuxième loi de commande de correction d'angle de braquage du volant, et
- la figure 5 est un diagramme de courbes montrant l'efficacité des lois de commande.

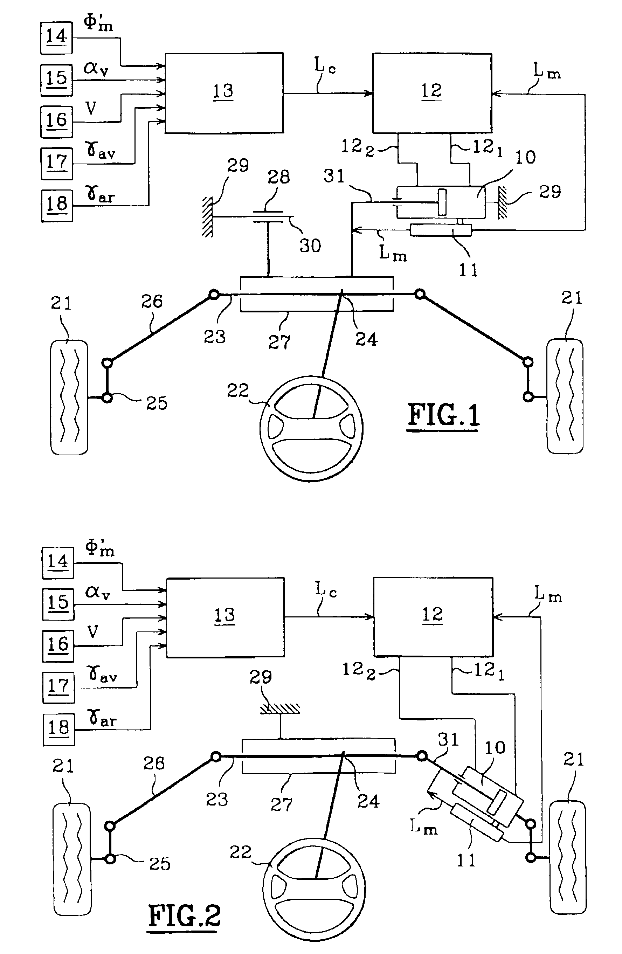

Sur ces figures, les éléments identiques portent les mêmes références. Ainsi, sur les figures 1 et 2 qui montrent schématiquement un train avant d'un véhicule léger auquel est associé un système de correction automatique de trajectoire selon l'invention, le braquage des roues avant 21 à l'aide d'un volant 22 est obtenu par le déplacement d'un barreau de crémaillère 23 à l'intérieur d'un boîtier de crémaillère 27 par l'intermédiaire d'un pignon 24. Le déplacement du barreau de crémaillère 23 par rapport au boîtier de crémaillère 27, qui est habituellement fixé à la caisse 29 du véhicule, entraîne le déplacement des biellettes de direction 26 qui vont faire tourner des porte-moyeux 25 et donc les roues 21.

Selon un premier exemple de réalisation de l'invention (figure 1), le boîtier de crémaillère 27 n'est pas fixé à la caisse du véhicule mais est monté sur une glissière 28 dont le corps est lié à la caisse 29, ce qui permet le déplacement du boîtier de crémaillère 27 selon un axe 30 par rapport à la caisse 29.

Selon ce premier exemple de réalisation de l'invention, le déplacement du boîtier de crémaillère 27 est obtenu par un vérin hydraulique 10 dont le corps est fixé à la caisse 29 et dont l'extrémité de la tige mobile 31 est fixée au boîtier de crémaillère 27.

Selon une caractéristique de l'invention, un capteur de position 11 est monté solidaire du corps du vérin hydraulique 10 et mesure l'élongation $L_m$ de la tige mobile 31.

Le signal représentatif de l'élongation $L_m$ est appliqué à un dispositif régulateur/électro-valve 12 qui reçoit par ailleurs un signal représentatif de l'élongation de consigne $L_c$ fourni par un calculateur 13. Ce dispositif 12 fournit sur ses sorties $12_1$ et $12_2$ les pressions pour déplacer dans un sens ou dans l'autre la tige mobile 31 du vérin hydraulique 10 de manière à obtenir l'égalité $L_m = L_c$.

Pour calculer la valeur de consigne $L_c$, le calculateur 13 a besoin de connaître certains paramètres qui sont au nombre de trois dans une première variante de la loi de commande, soit au nombre de cinq dans une deuxième variante de la loi de commande.

Dans la première variante, ces paramètres sont :

- la vitesse de lacet $\Phi'_m$ du véhicule mesurée par un capteur 14 tel un gyromètre,
- l'angle de braquage du volant $\alpha_v$ du véhicule mesuré par un capteur 15, et
- la vitesse linéaire longitudinale V du véhicule mesurée par un capteur 16.

Dans la deuxième variante, aux trois paramètres $\Phi'_m$, $\alpha_v$ et V s'ajoutent deux autres paramètres qui sont :

- l'accélération transversale avant $\Gamma_{av}$ du véhicule mesurée par un accéléromètre 17, et
- l'accélération transversale arrière $\Gamma_{ar}$ du véhicule mesurée par un accéléromètre 18.

Selon un deuxième exemple de réalisation de l'invention (figure 2), le boîtier de crémaillère 27 reste fixé à la caisse 29 de manière classique et le braquage supplémentaire des roues avant, et plus particulièrement d'une des deux roues avant 21, est obtenu en installant le vérin hydraulique 10 et le capteur de position 11 en lieu et place d'une des biellettes de direction 26.

Pour obtenir une correction de trajectoire identique avec une seule roue, la consigne de braquage correctif est multipliée par deux.

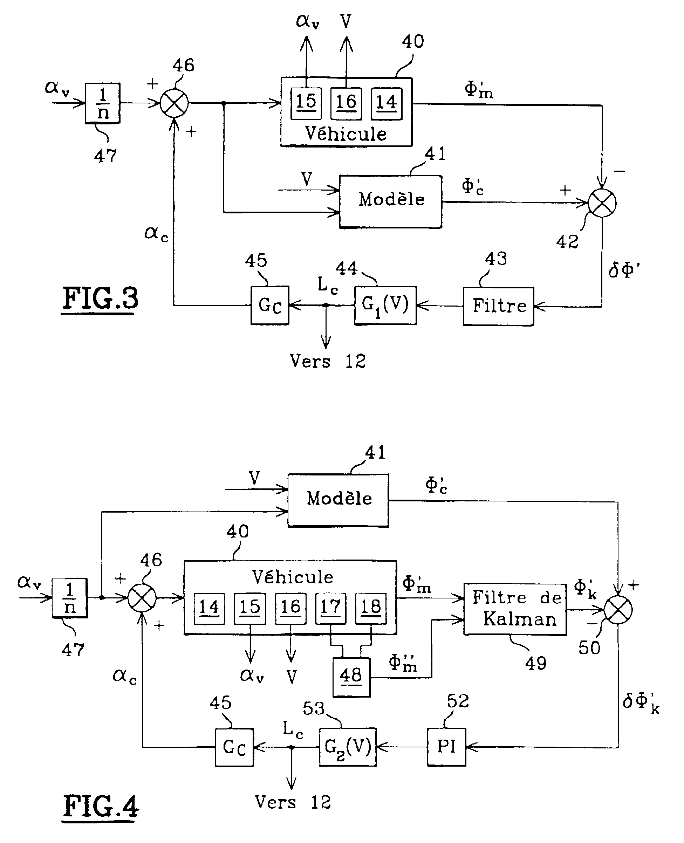

Dans ce deuxième exemple de réalisation, le calculateur 13 calcule l'élongation de consigne $L_c$ selon les deux variantes indiquées ci-dessus pour le premier exemple de réalisation et qui vont être décrites ci-après en relation avec les figures 3, 4 et 5.

Dans une première variante, dont le schéma fonctionnel est représenté par la figure 3, seuls les paramètres $\Phi'_m$, $\alpha_v$ et V mesurés respectivement par les capteurs 14, 15 et 16 disposés sur le véhicule 40 sont utilisés.

La vitesse de lacet de consigne $\Phi'_c$ est calculée par un modèle mathématique 41 qui peut être exprimé par la formule :

$$\Phi'_c = H\Omega \left[ \frac{\alpha_v}{nD/V + KV} \right]$$

dans laquelle :

- n est le rapport de démultiplication entre l'angle au volant $\alpha_v$ et l'angle moyen des roues avant,
- D est l'empattement du véhicule 40,
- K est un coefficient de dynamique angulaire, et
- $H\Omega$ est une fonction filtre du deuxième ordre représentative de la dynamique en lacet du véhicule.

La vitesse de lacet de consigne $\Phi'_c$ ainsi calculée est comparée dans un comparateur 42 à la vitesse de lacet mesurée $\Phi'_m$ pour obtenir une valeur d'écart $\delta\Phi' = \Phi_c - \Phi'_m$.

Cet écart $\delta\Phi'$ est filtré dans un filtre 43 puis amplifié dans un amplificateur 44, de gain $G_1(V)$ dépendant de la vitesse V, qui fournit la valeur d'élongation de consigne $L_c$. C'est cette valeur $L_c$ qui est appliquée au régulateur/électro-valve 12. La valeur d'élongation de consigne $L_c$ est transformée en un angle de correction des roues avant $\alpha_c$ par un coefficient multiplicateur $G_c$, angle de correction $\alpha_c$ qui est appliqué à une première entrée d'un additionneur 46 dont l'autre entrée reçoit l'angle moyen des roues avant obtenu par l'opération $\alpha_v/n$ matérialisée par le rectangle 47.

La valeur $(\alpha_v/n + \alpha_c)$ fournie par l'additionneur 46 est appliquée au véhicule 40 et au modèle 41.

Dans une deuxième variante, dont le schéma fonctionnel est représenté par la figure 4, on utilise les cinq paramètres $\Phi'_m$, $\alpha_v$, V, $\Gamma_{av}$ et $\Gamma_{ar}$, les accélérations transversales avant $\Gamma_{av}$ et arrière $\Gamma_{ar}$ étant utilisées pour calculer l'accélération de lacet $\Phi''_m$ par la formule :

$$\Phi''_m = (\Gamma_{av} - \Gamma_{ar})/d,$$

d étant la distance séparant les deux accéléromètres mesurant $\Gamma_{av}$ et $\Gamma_{av}$.

Ce calcul de $\Phi''_m$ est représenté par le rectangle 48. Les valeurs de $\Phi'_m$ et de $\Phi''_m$ sont traitées dans un filtre de Kalman 49 qui s'appuie sur la relation :

$$\Phi''_m = \frac{d}{dt} \Phi'_m$$

et sur la connaissance des bruits sur $\Phi''_m$ et $\Phi'_m$ pour obtenir une vitesse de lacet estimée $\Phi'_k$ qui est comparée à la vitesse de lacet de consigne $\Phi'_c$ calculée par le modèle 41 à partir de la vitesse linéaire V et de l'angle de braquage des roues $\alpha_v/n$ et non pas de $(\alpha_v/n + \alpha_c)$

comme dans la première variante.

La valeur d'écart $\delta\Phi'$ appliquée à un régulateur du type Proportionnel Intégral 52 suivi d'un amplificateur 53 de gain $G_2(V)$ adapté à la vitesse du véhicule.

L'amplificateur 53 fournit la valeur de l'élongation de consigne $L_c$ qui est appliquée au régulateur 12 pour modifier le braquage des roues et à l'additionneur 46 par l'intermédiaire d'un coefficient multiplicateur $G_c$ (rectangle 45).

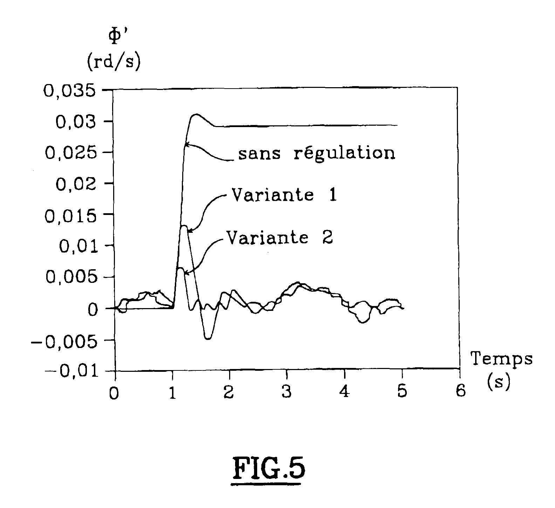

Les diagrammes de la figure 5 illustrent les performances obtenues par les deux variantes dans le cas d'un coup de vent latéral survenant en ligne droite à la vitesse de 100 km/h. Le volant reste bloqué et la correction est appliquée sur les deux roues avant.

La première variante (figure 3) atténue fortement l'écart de trajectoire du véhicule tandis que la deuxième variante (figure 4), plus dynamique, apporte un résultat encore meilleur puisque l'écart de trajectoire est presque annulé.

## Revendications

1. Système de correction automatique de la trajectoire d'un véhicule soumis à des perturbations dues à la chaussée ou au vent latéral comprenant un dispositif de braquage des roues avant du type à crémaillère (23, 24, 27) et à biellettes de direction (26), caractérisé en ce qu'il comprend :

   - des premiers moyens (11) pour mesurer une valeur représentative ($L_m$) de la position réelle de braquage des roues avant (21),
   - des deuxièmes moyens (13 à 18) pour calculer une valeur de consigne ($L_c$) pour le braquage des roues avant (21), et
   - des troisièmes moyens (12, 10) pour modifier la valeur représentative ($L_m$) de la position réelle de braquage de manière à obtenir l'égalité ($L_m = L_c$).

2. Système selon la revendication 1, caractérisé en ce que les troisièmes moyens comprennent un régulateur/électro-valve (12) qui reçoit la valeur mesurée ($L_m$) et la valeur calculée ($L_c$) et un vérin hydraulique (10) qui est commandé par les pressions fournies par le régulateur/électro-valve (12) de manière à modifier l'élongation de la tige mobile (31) du vérin hydraulique (10).

3. Système selon la revendication 2, caractérisé en ce que le vérin hydraulique (10) est solidaire de la caisse (29) du véhicule et en ce que la tige mobile (31) du vérin hydraulique est fixée au boîtier de crémaillère (27) qui est monté mobile (28, 39) par rapport à la caisse (29) du véhicule.

4. Système selon la revendication 2, caractérisé en ce que le vérin hydraulique (10) remplace une des deux biellettes de direction (26) de manière que sa tige mobile (31) soit fixée au barreau de crémaillère (23), le boîtier de crémaillère (27) étant fixé à la caisse (29) du véhicule.

5. Système selon l'une des revendications 2, 3 ou 4, caractérisé en ce que les premiers moyens comprennent un capteur de position (11) qui est solidaire du vérin hydraulique (10) et qui mesure l'élongation ($L_m$) de la tige mobile (31) du vérin hydraulique (10).

6. Système selon l'une quelconque des revendications précédentes 1 à 5, caractérisé en ce que les deuxièmes moyens pour calculer une valeur de consigne ($L_c$) pour le braquage des roues avant (29) comprennent :

   - des capteurs (14, 15, 16) pour mesurer la vitesse de lacet ($\Phi'_m$), l'angle volant ($\alpha_v$) et la vitesse linéaire longitudinale (V) du véhicule,
   - des moyens (41) pour calculer, selon un modèle mathématique, une vitesse de lacet de consigne ($\Phi'_c$) à partir des valeurs mesurées de l'angle volant ($\alpha_v$), de la vitesse linéaire longitudinale V, de l'empattement (D) du véhicule et du rapport de démultiplication (n) du volant et de la connaissance de la dynamique $H\Omega$ de la réponse en lacet du véhicule,
   - un comparateur (42) pour comparer la valeur de vitesse de lacet mesurée ($\Phi'_m$) et la valeur de vitesse de lacet de consigne ($\Phi'_c$) de manière à obtenir une valeur d'écart ($\delta\Phi'$),
   - des moyens de filtrage (43) et d'amplification (44) pour fournir la valeur d'élongation de consigne ($L_c$) à partir de la valeur d'écart ($\delta\Phi'$),
   - des moyens (45) pour obtenir une valeur de correction ($\alpha_c$) de l'angle de braquage des roues avant (21), et
   - un additionneur (46) pour ajouter la valeur de correction ($\alpha_c$) à l'angle de braquage ($\alpha_v/n$), la valeur corrigée étant appliquée aux moyens (41) de calcul de la vitesse de lacet de consigne ($\Phi'_c$).

7. Système selon l'une quelconque des revendications précédentes 1 à 5, caractérisé en ce que les deuxièmes moyens pour calculer une valeur de consigne ($L_c$) pour le braquage des roues avant (21) comprennent :

   - des capteurs (14 à 18) pour mesurer la vitesse de lacet ($\Phi'_m$), l'angle volant ($\alpha_v$), la vitesse linéaire longitudinale (V) et les accélérations transversales à l'avant ($\Gamma_{av}$) et à l'arrière ($\Gamma_{ar}$) du véhicule,
   - des moyens (41) pour calculer, selon un modèle mathématique, une vitesse de lacet de consigne $\Phi'_c$ à partir des valeurs mesurées de l'angle volant ($\alpha_v$), de la vitesse linéaire longitudinale (V), de l'empattement (D) du véhicule et du rapport de démultiplication (n) entre le volant (22), l'angle de braquage des roues avant (21) et de la connaissance de la dynamique $H\Omega$ de la réponse en lacet du véhicule.

- des moyens (48, 49) pour estimer une vitesse de lacet $\Phi'_k$ à partir des valeurs mesurées de la vitesse de lacet $\Phi'_m$ et des accélérations transversales avant ($\Gamma_{av}$) et arrière ($\Gamma_{ar}$),

- un comparateur (50) pour comparer la valeur estimée ($\Phi'_k$) de la vitesse de lacet à la valeur mesurée ($\Phi'_m$) de manière à obtenir une valeur d'écart ($\delta\Phi'_k$),

- des moyens de régulation (52) auxquels est appliquée la valeur d'écart ($\delta\Phi'_k$),

- des moyens d'amplification (53) pour fournir la valeur d'élongation de consigne ($L_c$) à partir de la valeur d'écart ($\delta\Phi'_k$) régulée,

- des moyens (45) pour obtenir une valeur de correction ($\alpha_c$) de l'angle de braquage des roues avant (21) à partir de la valeur d'élongation de consigne ($L_c$), et

- un additionneur (46) pour ajouter la valeur de correction ($\alpha_c$) de l'angle de braquage à l'angle de braquage ($\alpha_v$/n).

8. Système selon la revendication 7, caractérisé en ce que les moyens d'estimation de la vitesse de lacet ($\Phi'_k$) comprennent :

- un moyen (48) pour calculer l'accélération de lacet à partir des valeurs d'accélération avant ($\Gamma_{av}$) et arrière ($\Gamma_{ar}$) par la formule $\Phi''_m = (\Gamma_{av} - \Gamma_{ar})/d$, d étant la distance entre les accéléromètres (17 et 18), et

- un filtre Kalman (49) recevant les valeurs de la vitesse de lacet mesurées ($\Phi'_m$) et de l'accélération de lacet ($\Phi''_m$) fournies par le moyen de calcul (48).

9. Système selon la revendication 7 ou la revendication 8, caractérisé en ce que les moyens de régulation (52) sont du type Proportionnel-Intégral.

**FIG.1**

**FIG.2**

**FIG.3**

**FIG.4**

FIG.5

Office européen
des brevets

**RAPPORT DE RECHERCHE EUROPEENNE**

Numéro de la demande

EP 98 40 3206

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | DE 41 02 595 A (AISIN SEIKI) 8 août 1991<br><br>* colonne 2, ligne 56 – colonne 6, ligne 53; figures 1-9 * | 1,2,4,6,7 | B62D6/04 |
| A | --- | 8 | |
| X | US 4 540 059 A (SHIBAHATA YASUJI  ET AL) 10 septembre 1985<br>* colonne 1, ligne 45 – colonne 2, ligne 2 *<br>* colonne 2, ligne 23 – colonne 3, ligne 36 *<br>* figures 2-4 * | 1-3 | |
| A | --- | 6,7 | |
| X | EP 0 351 146 A (JAGUAR CARS) 17 janvier 1990<br>* colonne 1, ligne 3 – colonne 2, ligne 3 *<br>* colonne 2, ligne 26 – colonne 3, ligne 44 *<br>* revendications 1,8; figures * | 1-3 | |
| A | --- | 6,7 | DOMAINES TECHNIQUES RECHERCHES (Int.Cl.6)<br><br>B62D |
| X | DE 39 24 325 A (BAYERISCHE MOTOREN WERKE AG) 31 janvier 1991<br>* colonne 1, ligne 51 – ligne 59 *<br>* colonne 2, ligne 24 – ligne 65 *<br>* figure 1 * | 1,2,4 | |

_____

Le présent rapport a été établi pour toutes les revendications

| Lieu de la recherche | Date d'achèvement de la recherche | Examinateur |
|---|---|---|
| LA HAYE | 6 avril 1999 | Kulozik, E |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

.................................................................................
& : membre de la même famille, document correspondant

EPO FORM 1503 03.82 (P04C02)

# EP 0 927 678 A1

ANNEXE AU RAPPORT DE RECHERCHE EUROPEENNE
RELATIF A LA DEMANDE DE BREVET EUROPEEN NO.

EP 98 40 3206

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-04-1999

| Document brevet cité au rapport de recherche | | Date de publication | Membre(s) de la famille de brevet(s) | | Date de publication |
|---|---|---|---|---|---|
| DE 4102595 | A | 08-08-1991 | US | 5159553 A | 27-10-1992 |
| | | | FR | 2657834 A | 09-08-1991 |
| | | | JP | 4212672 A | 04-08-1992 |
| | | | US | 5141069 A | 25-08-1992 |
| | | | US | 5313389 A | 17-05-1994 |
| | | | US | 5230396 A | 27-07-1993 |
| US 4540059 | A | 10-09-1985 | JP | 1820584 C | 27-01-1994 |
| | | | JP | 5017069 B | 08-03-1993 |
| | | | JP | 58214457 A | 13-12-1983 |
| EP 0351146 | A | 17-01-1990 | JP | 2216370 A | 29-08-1990 |
| DE 3924325 | A | 31-01-1991 | AUCUN | | |

Pour tout renseignement concernant cette annexe : voir Journal Officiel de l'Office européen des brevets, No.12/82

10